# EUROPÄISCHE PATENTSCHRIFT

(11) **EP 2 635 534 B1**
(45) Veröffentlichungstag und Bekanntmachung des Hinweises auf die Patenterteilung: **21.09.2016**
(21) Anmeldenummer: 11779163.2
(22) Anmeldetag: 31.10.2011
(51) Int. Cl.: C02F 1/463, C25B 9/00, C02F 11/04, C02F 101/10

(54) **REAKTOR ZUR RÜCKGEWINNUNG VON PHOSPHATSALZEN AUS EINER FLÜSSIGKEIT**
REACTOR FOR RECOVERING PHOSPHATE SALTS FROM A LIQUID
RÉACTEUR POUR RÉCUPÉRER DES SELS DE PHOSPHATES CONTENUS DANS UN LIQUIDE

(30) Priorität: 06.11.2010 DE 102010050692
(43) Veröffentlichungstag der Anmeldung: 11.09.2013
(73) Patentinhaber: Fraunhofer-Gesellschaft zur Förderung der angewandten Forschung e.V., 80686 München (DE)
(72) Erfinder: BILBAO, Jennifer, 70569 Stuttgart (DE); BRYNIOK, Dieter, 72144 Dusslingen (DE); CAMPOS, Alejandra, 70569 Stuttgart (DE); EGNER, Siegfried, 74740 Adelsheim (DE)
(74) Vertreter: DREISS Patentanwälte PartG mbB
(86) Internationale Anmeldenummer: PCT/EP2011/069119
(87) Internationale Veröffentlichungsnummer: WO 2012/059465

(56) Entgegenhaltungen:
- EP-A1- 1 772 433
- US-A- 3 635 764
- US-A- 4 378 276
- US-A1- 2004 055 964

## Beschreibung

Die Erfindung betrifft einen Reaktor zur vollständigen Abtrennung von Phosphat aus einer Flüssigkeit und Rückgewinnung von Phosphatsalzen mit einem Gehäuse und zwei Elektroden unterschiedlicher Polarität.

Phosphatsalze wie Magnesiumammoniumphosphat(im Folgenden als MAP abgekürzt) oder Kaliummagnesiumphosphat (im Folgenden als KMP abgekürzt) sind hochwertige Pflanzenhilfsstoffe für die eine hohe Nachfrage besteht. Die Elemente Stickstoff, Kalium, Magnesium und Phosphat, aus denen diese Pflanzenhilfsstoffe aufgebaut sind, sind typischerweise in allen festen oder flüssigen organischen Abfällen enthalten. Während Kalium, Magnesium und weitere Ionen in Form wasserlöslicher Kationen vorliegen, sind Stickstoff und Phosphat zum überwiegenden Teil an oder in organischer Substanz bzw. Zellmasse gebunden. Damit steht ein Großteil von Stickstoff und Phosphat zur Produktion von Pflanzenhilfsstoffen nicht zur Verfügung. Deshalb ist es notwendig, Stickstoff und Phosphat in ihre, für die Fällung geeignete, anorganische Form umzuwandeln.

Die spontane Ausfällung von MAP oder KMP ist limitiert durch die üblicherweise sehr niedrige Magnesium-Konzentration im Abwasser. Bekannt ist die Zugabe von Magnesiumhydroxid, Magnesiumoxid oder löslichen Magnesiumsalzen zur MAP-Fällung. Der Nachteil dabei ist die schlechte Löslichkeit der Oxide, sowie der salzähnlichen Hydroxide. Bei Zugabe von Magnesiumhydroxid oder Magnesiumoxid zum Abwasser, lösen sich diese Verbindungen nur sehr langsam und zu einem geringen Anteil. Das führt dazu, dass kontinuierlich gerührt oder umgewälzt werden muss, was aber einen Mehraufwand an Technik und Energie und damit auch an Kosten verursacht. Darüber hinaus müssen beide Verbindungen aufgrund ihrer schlechten Löslichkeit überstöchiometrisch dosiert werden, da andernfalls eine unvollständige Fällung der gewünschten Pflanzenhilfsstoffe eintritt und erhebliche Mengen Phosphat im Abwasser verbleiben. Werden Magnesiumsalze vorab in eine Lösung überführt, verschlechtert sich durch die Verdünnung mit Wasser der Wirkungsgrad des Verfahrens.

Der optimale pH-Wert zur Fällung von MAP liegt bei 9. Abwasser hat normalerweise pH-Werte zwischen 5 und 7. Deswegen wird zu Anhebung des pH-Wertes eine Lauge zugegeben. Bei Verwendung einer löslichen Lauge, wie beispielsweise Natriumhydroxid. Bei Verwendung einer schlechtlöslichen Lauge wie z.B. Magnesiumhydroxid, löst sich dieses kaum in Wasser, und die vorangehend erwähnten Nachteile treten ein.

Eine weitere Möglichkeit zur Einstellung eines für die Fällung günstigen pH-Wertes ist in der DE 101 12 934 B4 genannt. Die darin erwähnte Belüftung von Faulschlamm mit anschließendem CO₂-Stripping ist jedoch sehr energieintensiv und verursacht deshalb hohe Zusatzkosten.

Die WO 00200101019735 A1 beschreibt einen Reaktor zur Entfernung von gelöstem Stickstoff und Phosphat aus dem wässrigen Anteil von Gülle mittels elektrochemischen Fällung.

Der darin beschriebene Reaktor benötigt relativ hohe elektrische Spannungen und ist damit energie- und kostenintensiv. Nachteilig ist auch, dass Stickstoff und Phosphat, die organisch gebunden im wässrigen Anteil der Gülle vorliegen durch das beschriebene Verfahren nicht entfernt werden. In Folge dessen muss dieses Abwasser einer anschließenden Reinigung in einer Kläranlage zugeführt werden. Nachteilig ist die Konstruktion des Reaktors insofern, dass durch die Anordnung der Elektroden große Bereiche entstehen in denen die zu reinigende Flüssigkeit keinen direkten Kontakt mit den Elektroden hat. Zudem wird durch die Geometrie der Opferanode mehr Magnesium als nötig freigesetzt. Beides reduziert die Effizienz des Reaktors erheblich. Weiterhin gelangt bei diesem Verfahren durch den Einsatz von aluminiumhaltigen Elektroden das Pflanzengift Aluminium in das Fällungsprodukt. Wird dieses Produkt auf den Boden gegeben, kann das Aluminium freigesetzt werden und das Pflanzenwachstum nachteilig beeinflussen.

Ein elektrochemischer Fällungsreaktor für MAP ist aus der WO 2007/009749 A1 bekannt. Der Reaktor ist jedoch nicht geeignet für die Fällung anderer Phosphatsalze. Die Konstruktion des Reaktors lässt auch keine automatische Trennung zwischen gereinigtem Abwasser und gefälltem MAP zu, so dass dem Reaktor ein weiterer Apparat zur fest-flüssig Trennung nachgeordnet werden muss. Außerdem ist ein wesentlich höherer apparativer Aufwand erforderlich, da konstruktionsbedingt das Gehäuse des Reaktors nicht als Kathode betrieben werden kann. Zusätzlich wird das Magnesium ungleichmäßig aufgelöst, weil durch die räumliche Anordnung der Elektroden im Reaktor nur eine Seite der Anode in die Reaktion einbezogen wird.

Der Erfindung liegt die Aufgabe zugrunde, einen Reaktor bereitzustellen, mit dessen Hilfe phosphathaltige Abwässer aufbereitet und einer weiteren Verwendung zugeführt werden können. Des Weiteren liegt der Erfindung die Aufgabe zugrunde, einen Reaktor zu Gewinnung von Phosphatsalzen als Pflanzenhilfsstoffe bereitzustellen, welches die oben gennannten Nachteile des Standes der Technik überwindet.

Die Aufgabe wird erfindungsgemäß gelöst durch einen Reaktor mit einem Gehäuse. Im Zentrum des Gehäuses ist eine Opferanode aus Magnesium oder einem magnesiumhaltigen Werkstoff angeordnet. Eine inerte Kathode ist konzentrisch um die Opferanode angeordnet. Dadurch bietet die erfindungsgemäße Anordnung der Elektroden eine bestmögliche Steuerung der Freisetzung von Magnesiumionen. Da der Abstand zwischen Magnesiumanode und Kathode so gering wie möglich gehalten ist, gelangen die zur Fällung der Phosphatsalze benötigten Ionen sofort in Kontakt zueinander und eine konstant hohe Konzentration an Magnesiumionen im Reaktionsraum ist gewährleistet. Gleichzeitig ist durch die Geometrie der Opferanode deren Oberfläche sehr klein, so dass wenig Magnesium spontan freigesetzt wird. Dadurch wird in vorteilhafter Weise ein unnötiger Überschuss an Magnesiumionen vermieden.

Mit Hilfe des erfindungsgemäßen Reaktors ist es möglich, durch Anlegen einer geringen elektrische Gleichspannung, kleiner 1 V mit Stromstärken unter 1 A, der phosphat- und ammoniumhaltigen Flüssigkeit Magnesiumionen zuzuführen und das in der Flüssigkeit enthaltene Wasser in OH⁻ und H⁺-Ionen aufzuspalten, so dass der pH-Wert erhöht wird und die zur Fällung notwendigen Reaktionen ablaufen können. Durch den geringen Energiebedarf sinken die Kosten für den Betrieb der Anlage gegenüber den aus dem Stand der Technik bekannten Verfahren. Es ist sogar ein galvanischer Betrieb des Reaktors möglich. Wobei elektrischer Strom erzeugt wird.

Weiterhin wird vorgeschlagen, dass dem erfindungsgemäßen Reaktor ein anaerober Gärprozess vorgeschaltet wird. In diesem Gärprozess werden Stickstoff und Phosphor, die organisch gebunden sind zu anorganischen, wasserlöslichen Ionen abgebaut. Aus diesen Ionen, Ammonium (NH₄⁺) und Phosphat (PO₄³⁻) können die Phosphatsalze, insbesondere MAP und KMP gebildet werden. Damit wird in vorteilhafter Weise Stickstoff und Phosphat, die zum überwiegenden Teil, an oder in organischer Substanz bzw. Zellmasse gebunden sind, in eine wasserlösliche Form überführt und stehen damit der Produktion von Pflanzenhilfsstoffen zur Verfügung. Weiterhin entsteht bei diesem Prozess Biogas, das als Energielieferant erheblichen Marktwert besitzt.

Eine vorteilhafte Ausgestaltung der Erfindung sieht vor, dass das Gehäuse aus einem elektrisch leitfähigen Werkstoff, beispielsweise Metall, gefertigt wird und somit als inerte Kathode dient. Durch die erfindungsgemäße Geometrie des Reaktors und der konzentrischen Anordnung der Opferanode ist der Reaktionsraum auf den Raum zwischen den beiden Elektroden beschränkt. Es wird Totvolumen vermieden und damit die Materialkosten gesenkt.

Ein weiterer Vorteil der Erfindung sieht vor, dass die Opferanode im Wesentlichen aus Magnesium besteht. Selbstverständlich sind damit auch Elektrodenwerkstoffe umfasst, die aus einer Magnesiumlegierung oder Magnesium mit geringen Zusätzen anderer Bestandteile bestehen.

Um den Prozess der Phosphatsalzgewinnung kontinuierlich durchführen zu können, weist der erfindungsgemäße Reaktor einen Zulauf für die phosphathaltige Flüssigkeit, einen Ablauf für die gereinigte Flüssigkeit sowie einen Abzug für die ausgefällten Phosphatsalze auf. Die Kristalle können über den Abzug mittels einer Absperrarmatur, wie beispielsweise einem Sitz- oder Scheibenventil oder einem Kugelhahn, aus dem Reaktor entfernt werden ohne dass der Zu-oder Ablauf verändert und damit die Reinigungsleistung des Reaktors beeinträchtigt wird.

Eine vorteilhafte Ausgestaltung des erfindungsgemäßen Reaktors sieht vor, den Reaktor als Aufstromreaktor zu betreiben. Dabei befindet sich der Zulauf unten seitlich am Reaktor. Das Abwasser strömt aufwärts und entweicht oben seitlich. Diese Anordnung hat den Vorteil, dass eine automatische Trennung von Flüssigkeit, die nach oben strömt, und ausgefällten Salzen, die zu Boden sinken, stattfindet.

Prinzipiell kann der Reaktor auch als Abstromreaktor betrieben werden, wobei sich Flüssigkeit und Feststoff in gleicher Richtung bewegen. Dadurch wird die Sedimentationsgeschwindigkeit der ausgefällten Phosphatsalze beschleunigt. Das bedeutet, der Reaktor kann bei gleichem Durchsatz kleiner gebaut werden.

Ergänzend wird vorgeschlagen, dass die Kristalle in einem Filter von der Flüssigkeit abgetrennt werden. Dadurch können beim von oben nach unten durchströmten Reaktor die gefällten Phosphatsalze gemeinsam mit der Flüssigkeit aus dem Reaktor entnommen werden. Damit werden zusätzliche Armaturen oder Vorrichtungen zum separaten Feststoffaustrag eingespart. Außerdem wird beim gemeinsamen Abzug von Phosphatsalzen und gereinigtem Abwasser in der Leitung eine turbulente Strömung erzeugt, die ein Zusetzen der Leitung durch die Kristalle verhindert.

Besonders hilfreich ist es, wenn das Gehäuse des Reaktors geschlossen ist. Bei den im Reaktor ablaufenden elektrolytischen Reaktionen entstehen große Mengen Schaum, der bei geschlossenem Gehäuse nicht überlaufen kann. Damit wird in vorteilhafter Weise ein Produktverlust vermieden. Grundsätzlich kann das Gehäuse des Reaktors auch teilweise oder ganz offen sein.

Der erfindungsgemäße Reaktor arbeitet noch besser, wenn er über einen schrägen Boden verfügt. Dadurch wird es möglich, dass die ausgefällten Kristalle an der Schräge entlang nach unten gleiten und sich am Abzug sammeln. Dadurch können die Kristalle aus dem Reaktor entnommen werden, ohne dessen kontinuierlichen Betrieb zu unterbrechen. Erreicht wird die Bildung der Schräge durch einen vorzugsweise kegelförmigen Boden. Denkbar ist aber auch die Form einer Pyramide.

Eine vorteilhafte Ausgestaltung des erfindungsgemäßen Reaktors sieht vor, dass an die Opferanode ein Pluspol und an die Kathode ein Minuspol einer Gleichstromquelle angeschlossen wird. Die Zufuhr von Strom verhindert Ablagerungen an der Elektrode, die im elektrischen Feld nicht stabil sind. Wird der Reaktor andererseits ohne Gleichstromquelle betrieben, wir durch den Prozess der Magnesiumablösung Elektronen freigesetzt. Das bedeutet, dass der Reaktor keinen elektrischen Strom benötigt, sondern sogar noch Strom erzeugen kann.

Weitere Vorteile und vorteilhafte Ausgestaltungen der Erfindung sind den nachfolgenden Figuren, deren Beschreibung und den Patentansprüchen entnehmbar. Dabei können alle in den Figuren, deren Beschreibung und den Patentansprüchen offenbarten Merkmale sowohl einzeln als auch in beliebiger Kombination miteinander erfindungswesentlich sein.

### Es zeigen:

Figur 1 eine schematische Darstellung des erfindungsgemäßen Reaktors
Figur 2 eine schematische Darstellung einer ersten Ausgestaltung des erfindungsgemäßen Reaktors
Figur 3 eine schematische Darstellung einer zweiten Ausgestaltung des erfindungsgemäßen Reaktors
Figur 4 eine schematisch Darstellung einer dritten Ausgestaltung des erfindungsgemäßen Reaktors
Figur 5 eine schematische Darstellung einer Ausgestaltung des Reaktors zur Gewinnung von Phosphatsalzen und
Figur 6 eine schematische Darstellung der Anwendung des erfindungsgemäßen Reaktors mit vorgeschaltetem Gärprozess

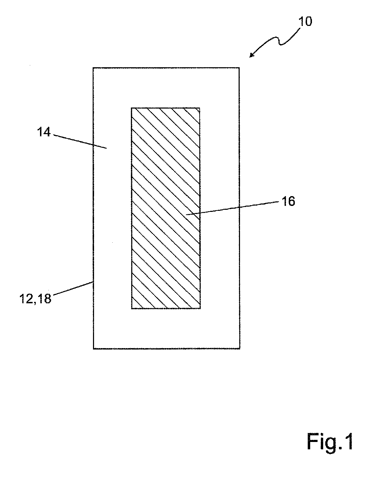

Figur 1 zeigt eine schematische Darstellung eines erfindungsgemäßen Reaktors 10. Der Reaktor 10 weist ein Gehäuse 12 auf. Das Gehäuse 12 dient dazu, eine phosphathaltige Flüssigkeit 14 aufzunehmen. Im Zentrum des Gehäuses 12 ist eine Elektrode 16 angeordnet.

Die Elektrode 16 ist eine sogenannte Opferanode, die mit dem Pluspol einer in der Zeichnung nicht dargestellten Gleichstromquelle verbunden ist, während das Gehäuse 12 die Kathode 18 bildet, welche mit einem Minuspol der Gleichstromquelle verbunden ist.

Die Opferanode 16 besteht aus einem magnesiumhaltigen Werkstoff, so dass Magnesiumionen in die Flüssigkeit 14 gelangen, sobald eine elektrische Spannung an die Elektroden 16 und 18 angelegt wird.

Reaktionsgleichung zur Bildung von MAP:

Mg²⁺ + NH₄⁺ + PO₄³⁻ + 6H₂O -> MgNH₄PO%₄ 6 H₂O

Reaktionsgleichung zur Bildung von KMP:

Mg²⁺ + K⁺ + PO₄³⁻ + 6H₂O -> MgKPO₄ · 6 H₂O

Reaktionsgleichung für die Ablösung von Magnesium:

Mg(s) -> Mg₂⁺ + 2e⁻

Reaktionsgleichung zu Bildung von Hydroxidionen:

2H₂O + 2e- -> 2OH⁻ + H₂

Die gebildeten Phosphatsalze sind in wässriger Lösung schwer löslich und fallen als Kristalle aus, die sich an einem Boden des Reaktors 10 absetzen.

Eine Ausgestaltung des erfindungsgemäßen Reaktors 10 sieht einen galvanischen Betrieb vor. Dafür werden die beiden Elektroden 16, 18, nicht an die externe Gleichstromquelle angeschlossen. Die Magnesiumionen werden durch den galvanischen Betrieb in Lösung überführt.

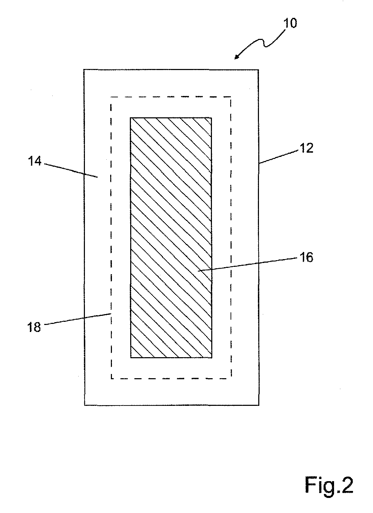

Figur 2 zeigt eine erste Ausgestaltungsvariante des erfindungsgemäßen Reaktors 10. Dargestellt ist das Gehäuse 12 des Reaktors und darin zentriert angeordnet die als Opferanode ausgebildete Elektrode 16. Konzentrisch zwischen Gehäuse 12 und Elektrode 16 angeordnet ist die Kathode 18. Bei dieser speziellen Anordnung wird der Abstand zwischen Opferanode 16 und inerter Kathode 18 minimal gehalten, damit die an der Fällung beteiligten Ionen sofort in Kontakt zueinander gelangen.

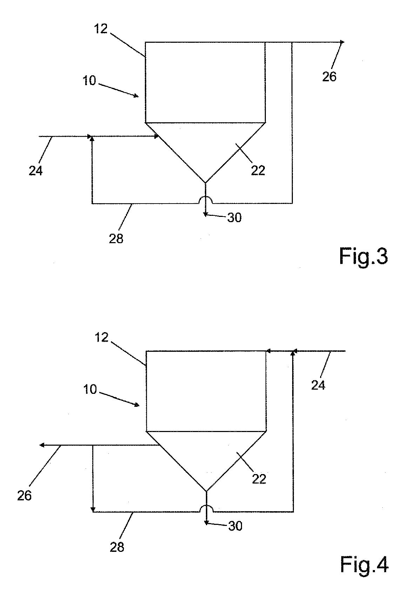

In Figur 3 ist der Reaktor 10 dargestellt. Seitlich an einem vorzugsweise kegelförmigen Boden 22 befindet sich ein Zulauf 24. Ein Ablauf 26 befindet sich oben seitlich am Gehäuse 12 des Reaktors 10. Ein optionaler Rücklauf 28 verbindet den Ablauf 26 mit dem Zulauf 24. Unten am vorzugsweise kegelförmigen Boden 22 befindet sich der Abzug 30.

Die phosphathaltige Flüssigkeit 14 strömt durch den Zulauf 24 von unten nach oben durch den Reaktor 10 und verlässt ihn durch den Ablauf 26. Die ausgefällten Phosphatsalze gleiten an der schiefen Ebene des kegelförmigen Bodens 22 nach unten und werden über den Abzug 30 entnommen. Auf diese Art und Weise kann der Reaktor 10 kontinuierlich betrieben werden und die ausgefällten und abgesetzten Kristalle können jederzeit entnommen werden, ohne einen Durchsatz des Reaktors zu verändern. Über den optionalen Rücklauf 28 wird bereits gereinigte Flüssigkeit 14 als Kreislaufwasser wieder dem Reaktor 10 zugeführt.

Figur 4 zeigt eine dritte erfindungsgemäße Ausgestaltung des Reaktors 10. Dabei wird der Reaktor 10 abwärts durchströmt. Der Zulauf 24 befindet sich oben seitlich am Gehäuse 12. Der Ablauf 26 befindet sich seitlich am kegelförmigen Boden 22. Der optionale Rücklauf 28 verbindet den Ablauf 26 mit dem Zulauf 24. Unten am kegelförmigen Boden 22 ist der Abzug 30 angeordnet.

Die phosphathaltige Flüssigkeit 14 strömt durch den Zulauf 24 von oben nach unten durch den Reaktor 10 und verlässt ihn durch den Ablauf 26. Ausgefällte Phosphatsalze werden über den Abzug 30 entnommen, ohne den Betrieb des Reaktors zu beeinflussen. Über den Rücklauf 28 wird bereits gereinigte Flüssigkeit 14 als Kreislaufwasser wieder dem Reaktor 10 zugeführt.

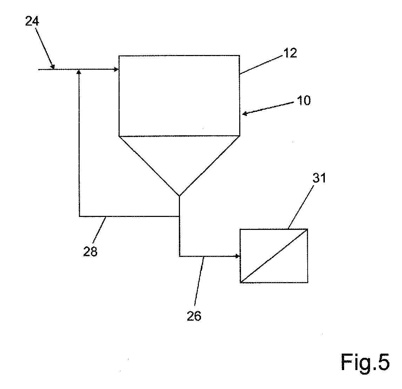

Figur 5 zeigt eine weitere Ausgestaltung des Reaktors 10. Dabei wird der Reaktor 10 abwärts durchströmt. Der Zulauf 24 befindet sich oben seitlich am Gehäuse 12. Der Ablauf 26 befindet sich unten am kegelförmigen Boden 22 und führt von dort zu einem nachgeordneten Filter 31 Der optionale Rücklauf 28 verbindet den Ablauf 26 mit dem Zulauf 24.

In dieser Ausgestaltung werden die ausgefällten Phosphatsalze zusammen mit den gereinigten Flüssigkeit 14 aus dem Reaktor 10 ausgetragen. Im anschließenden Filter 31 werden die Phosphatsalze von der Flüssigkeit 14 getrennt. Dabei besteht die Möglichkeit, über den Rücklauf 28, dem Reaktor 10 Impfkristalle zuzuführen.

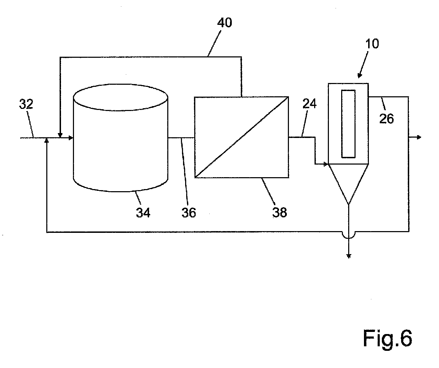

In Figur 6 ist eine Anwendung des erfindungsgemäßen Reaktors 10 bei der Gewinnung von Biogas aus phosphorhaltigem Abwasser schematisch dargestellt.

Ein Abwasserstrom 32 organischer Herkunft wird einem Bioreaktor 34 zugeführt. Dort werden durch anaerobe Gärprozesse die in den Feststoffen enthaltenen organischen Kohlenstoffverbindungen in Biogas und mineralische Reststoffe umgewandelt. Dabei entsteht ammonium - und phosphathaltiges Prozesswasser 36. Bevor das Prozesswasser 36 über den Zulauf 24 dem Reaktor 10 zugeführt wird, werden in einem Filter 38 eventuell enthaltene Feststoffe 40 abgetrennt. Die im Filter 38 zurückgehaltenen Feststoffe 40 werden wieder dem Bioreaktor 34 zugeführt. In dem erfindungsgemäßen Reaktor 10 werden in zuvor beschriebener Weise die Phosphatsalze abgetrennt. Der ammonium- und phosphatfreie Ablauf 26 kann teilweise in den Bioreaktor 34 zurückgeführt werden. Damit wird eine Hemmung des Gärprozesses, verursacht durch eine hohe Ammoniumkonzentration, verhindert.

## Patentansprüche

1. Reaktor (10) zur vollständigen Kristallisation von MAP und KMP aus einer Flüssigkeit (14) und Rückgewinnung der Phosphatsalzen MAP und KMP mit einem Gehäuse (12) und zwei Elektroden (16, 18) unterschiedlicher Polarität, wobei eine Opferanode (16) aus einem magnesiumhaltigen Werkstoff und eine inerte Kathode (18) konzentrisch innerhalb des Gehäuses (12) angeordnet sind, **dadurch gekennzeichnet, dass** der Reaktor (10) einen Abzug (30) aufweist, über den die ausgefällten Phosphatsalze entnommen werden und er einen Zulauf (24) und einen Ablauf (26) aufweist.

2. Reaktor (10) nach Anspruch 1, **dadurch gekennzeichnet, dass** das Gehäuse (12) aus einem elektrisch leitfähigen Material gefertigt ist und als inerte Kathode (18) dient.

3. Reaktor (10) nach einem der vorangehenden Ansprüche, **dadurch gekennzeichnet, dass** die Opferanode (16) im Wesentlichen aus Magnesium besteht.

4. Reaktor (10) nach einem der vorangehenden Ansprüche, **dadurch gekennzeichnet, dass** der Reaktor (10)vertikal von unten nach oben durchströmt wird.

5. Reaktor (10) nach einem der vorangehenden Ansprüche, **dadurch gekennzeichnet, dass** der Reaktor (10) vertikal von oben nach unten durchströmt wird.

6. Reaktor (10) nach einem der vorangehenden Ansprüche, **dadurch gekennzeichnet, dass** die Kristalle in einem Filter (31) von der Flüssigkeit (14) abgetrennt werden

7. Reaktor (10) nach einem der vorangehenden Ansprüche, **dadurch gekennzeichnet, dass** das Gehäuse(12) des Reaktors (10) geschlossen ist.

8. Reaktor (10) nach einem der vorangehenden Ansprüche, **dadurch gekennzeichnet, dass** das Gehäuse (12) des Reaktors (10) offen ist.

9. Reaktor (10) nach einem der vorangehenden Ansprüche, **dadurch gekennzeichnet, dass** er über einen schrägen Boden (22) verfügt.

10. Reaktor (10) nach einem der vorangehenden Ansprüche, **dadurch gekennzeichnet, dass** an die Opferanode (16) ein Pluspol und an die Kathode (18) ein Minuspol einer Gleichstromquelle angeschlossen wird.

## Claims

1. Reactor (10) for complete crystallization of MAP and PMP from a liquid (14) and recovery of phosphate salts MAP and PMP, comprising a housing (12) and two electrodes (16, 18) of different polarity, wherein a sacrificial anode (16) of a magnesium-containing material and an inert cathode (18) are arranged concentrically within the housing (12), **characterized in that** the reactor (10) comprises a removal device (30) for removal of the precipitated phosphate salts and it has an inlet (24) and an outlet (26).

2. Reactor (10) according to claim 1, **characterized in that** the housing (12) is manufactured of an electrically conducting material and serves as an inert cathode (18).

3. Reactor (10) according to one of the preceding claims, **characterized in that** the sacrificial anode (16) is substantially comprised of magnesium.

4. Reactor (10) according to one of the preceding claims, **characterized in that** the reactor (10) is flowed through in vertical direction from the bottom to the top.

5. Reactor (10) according to one of the preceding claims, **characterized in that** the reactor (10) is flowed through in vertical direction from the top to the bottom.

6. Reactor (10) according to one of the preceding claims, **characterized in that** the crystals are separated in a filter (31) from the liquid (14).

7. Reactor (10) according to one of the preceding claims, **characterized in that** the housing (12) of the reactor (10) is closed.

8. Reactor (10) according to one of the preceding claims, **characterized in that** the housing (12) of the reactor (10) is open.

9. Reactor (10) according to one of the preceding claims, **characterized in that** it has a slanted bottom (22).

10. Reactor (10) according to one of the preceding claims, **characterized in that** to the sacrificial anode (16) a positive pole and to the cathode (18) a negative pole of a direct current source are connected.

## Revendications

1. Réacteur (10) pour la cristallisation complète de phosphate de magnésium/d'ammonium et de phosphate de potassium/magnésium contenus dans un liquide (14) et pour la récupération des sels de phosphate de phosphate de magnésium/d'ammonium et de phosphate de potassium/magnésium, comprenant un carter (12) et deux électrodes (16, 18) de polarité différente, dans lequel une anode sacrificielle (16) en un matériau contenant du magnésium et une cathode inerte (18) sont disposées de manière concentrique à l'intérieur du carter (12), **caractérisé par le fait que** le réacteur (10) présente un point de décharge (30) par lequel les sels de phosphate précipités sont prélevés et qu'il présente un point d'amenée (24) et un point de sortie (26).

2. Réacteur (10) selon la revendication 1, **caractérisé par le fait que** le carter (12) est réalisé à partir d'un matériau électroconducteur et sert de cathode inerte (18).

3. Réacteur (10) selon l'une quelconque des revendications précédentes, **caractérisé par le fait que** l'anode sacrificielle (16) se compose pour l'essentiel de magnésium.

4. Réacteur (10) selon l'une quelconque des revendications précédentes, **caractérisé par le fait que** le réacteur (10) est traversé verticalement de bas en haut.

5. Réacteur (10) selon l'une quelconque des revendications précédentes, **caractérisé par le fait que** le réacteur (10) est traversé verticalement de haut en bas.

6. Réacteur (10) selon l'une quelconque des revendications précédentes, **caractérisé par le fait que** les cristaux sont séparés du liquide (14) dans un filtre (31).

7. Réacteur (10) selon l'une quelconque des revendications précédentes, **caractérisé par le fait que** le carter (12) du réacteur (10) est fermé.

8. Réacteur (10) selon l'une quelconque des revendications précédentes, **caractérisé par le fait que** le carter (12) du réacteur (10) est ouvert.

9. Réacteur (10) selon l'une quelconque des revendications précédentes, **caractérisé par le fait qu'**il dispose d'un fond oblique (22).

10. Réacteur (10) selon l'une quelconque des revendications précédentes, **caractérisé par le fait qu'**un pôle positif d'une source de courant continu est connecté à l'anode sacrificielle (16) et un pôle négatif de celle-ci est connecté à la cathode (18).
